# EUROPEAN PATENT SPECIFICATION

(11) **EP 4 421 824 B1**
(45) Date of publication and mention of the grant of the patent: **06.05.2026**
(21) Application number: 21962231.3
(22) Date of filing: 16.12.2021
(51) Int. Cl.: G21C 3/04, G21C 3/16

(54) **FUEL MODULE AND APPLICATION THEREOF**
KRAFTSTOFFMODUL UND DESSEN VERWENDUNG
MODULE DE COMBUSTIBLE ET SON APPLICATION

(30) Priority: 29.10.2021 CN 202111275960
(43) Date of publication of application: 28.08.2024
(73) Proprietor: China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: XUE, Jiaxiang, Shenzhen, Guangdong 518031 (CN); WU, Lixiang, Shenzhen, Guangdong 518031 (CN); ZHANG, Xiansheng, Shenzhen, Guangdong 518031 (CN); REN, Qisen, Shenzhen, Guangdong 518031 (CN); LIAO, Yehong, Shenzhen, Guangdong 518031 (CN); ZHANG, Yongdong, Shenzhen, Guangdong 518031 (CN)
(74) Representative: Westphal, Mussgnug & Partner, Patentanwälte mbB
(86) International application number: PCT/CN2021/138610
(87) International publication number: WO 2023/070888

(56) References cited:
- CN-A- 106 663 479
- CN-A- 109 509 563
- CN-A- 110 289 109
- CN-A- 111 627 572
- CN-A- 111 627 572
- CN-A- 113 270 206
- JP-A- H10 153 685
- US-A- 3 413 196
- US-A- 4 076 775

## Description

### TECHNICAL FIELD

The present invention relates to the field of nuclear fuel technology, particularly to a fuel module and its application.

### BACKGROUND

Nuclear energy, as a clean energy source, is favored by various industries. However, the safety issues associated with nuclear energy cannot be ignored, especially the need to ensure that the fuel in the reactor core does not melt or leak under extreme accident conditions. Currently used Zr alloy cladding is prone to damage in loss-of-coolant accidents (LOCA), leading to high hydrogen production rates and increasing the safety concerns of nuclear reactors.

To address these issues, a promising alternative is to use SiC cladding instead of existing Zr alloy cladding, and to use fully ceramic-coated fuel (FCM), inert matrix fuel (IMF), or inert matrix dispersed fuel (IMDP) instead of existing fuel, to enhance the safety of nuclear reactors. However, these approaches still require cladding to ensure that nuclear fuel does not leak. The thin-walled, long tubular nature of the cladding still poses the risk of damage.

Based on the above application background, there is an urgent need to develop a new type of nuclear fuel element to further improve the safety of nuclear reactors while meeting the service conditions of the new generation of nuclear energy systems.

Nuclear fuel modules and applications thereof are known, for example, from CN 111 627 572 A (04.09.2020, SHANGHAI INST APPLIED PHYSICS CAS) and US 3 413 196 A (26.11.1968, PETER FORTESCUE ET AL).

### SUMMARY OF THE INVENTION

### TECHNICAL PROBLEM

The technical problem to be solved by the present invention is to provide an integrated fuel module capable of improving the safety of nuclear reactors and its application.

### SOLUTION TO THE PROBLEM

### TECHNICAL SOLUTION

The problem underlying the present application is solved by a nuclear fuel module having the features of claim 1 and by an application having the features of claim 11.

The technical solution adopted by the present invention to solve the technical problem is to provide a fuel module, comprising a columnar structure, multiple hollow closed holes dispersedly arranged on the columnar structure, multiple cooling through-holes, and fuel disposed inside the columnar structure;

The hollow closed holes are located inside the columnar structure, and the fuel is filled in each hollow closed hole; the cooling through-holes are separated from the hollow closed holes and penetrate the columnar structure on opposite sides for coolant passage.

Preferably, the columnar structure is made of one or more of metal, ceramic, glass, and composite materials.

Preferably, the columnar structure is made of at least one of Zr alloy, stainless steel, molybdenum alloy, high-entropy alloy, silicon carbide, zirconium carbide, silicon carbide fiber reinforced silicon carbide composite material, high-entropy ceramic, and metal ceramic composite material.

Preferably, the columnar structure is cylindrical, elliptical, or polygonal.

Preferably, the pore diameter of the hollow closed holes is 5mm to 15mm.

Preferably, multiple hollow closed holes extend vertically and/or horizontally within the columnar structure.

Preferably, multiple hollow closed holes are arranged to form multiple rows of closed hole groups, each closed hole group comprising one or more hollow closed holes.

Preferably, the spacing between adjacent two rows of closed hole groups is 10mm to 30mm.

Preferably, in the closed hole group, the spacing between adjacent two hollow closed holes is 5mm to 15mm.

Preferably, the pore diameter of the cooling through-holes is 5mm to 15mm.

Preferably, multiple cooling through-holes are arranged to form multiple rows of through-hole groups, each through-hole group comprising one or more cooling through-holes.

Preferably, the spacing between adjacent two rows of through-hole groups is 10mm to 30mm.

Preferably, in the through-hole group, the spacing between adjacent two cooling through-holes is 5mm to 15mm.

Preferably, the hollow closed holes and the cooling through-holes are arranged in an interleaved manner.

Preferably, the minimum distance between the center of the hollow closed holes and the outer surface of the columnar structure is 3mm to 10mm.

Preferably, the minimum distance between the center of the cooling through-holes and the outer surface of the columnar structure is 3mm to 10mm.

Preferably, in the columnar structure, the number of hollow closed holes is 30 to 300.

Preferably, the fuel is at least one of block fuel, granular fuel, or liquid fuel.

Preferably, the block fuel includes at least one of fully ceramic-coated nuclear fuel and nuclear fuel sintered blocks.

Preferably, the granular fuel includes coated granular fuel.

Preferably, the liquid fuel includes at least one compound of liquid uranium and liquid plutonium.

The present invention also provides an application of the fuel module, where the fuel module is used for water-cooled reactors, lead-cooled reactors, molten salt reactors, sodium-cooled reactors, or gas-cooled reactors.

### BENEFICIAL EFFECTS OF THE INVENTION

### BENEFICIAL EFFECTS

The fuel module of the present invention is used a columnar structure as the main supporting body, and is filled with fuel through hollow closed holes, and with the cooling through-holes to form an integrated structure. It differs from the existing fuel component structure of cladding-core components, the overall structural is of high strength, capable of withstanding high pressure, safe and reliable, and improving the safety of nuclear reactors.

The fuel module of the present invention is not only suitable for water-cooled reactors but also for lead-cooled reactors, molten salt reactors, sodium-cooled reactors, gas-cooled reactors, and other new types of reactors.

### BRIEF DESCRIPTION OF THE DRAWINGS

The present invention will be further described in conjunction with the accompanying drawings and embodiments. In the drawings:
Figure 1 is a schematic diagram of a fuel module according to an embodiment of the present invention;
Figure 2 is a schematic cross-sectional view of the fuel module according to an embodiment of the present invention.

### PREFERRED EMBODIMENT FOR IMPLEMENTING THE INVENTION

### PREFERRED EMBODIMENT OF THE INVENTION

In order to have a clearer understanding of the technical features, objectives, and effects of the present invention, specific embodiments of the present invention will now be described in detail with reference to the accompanying drawings.

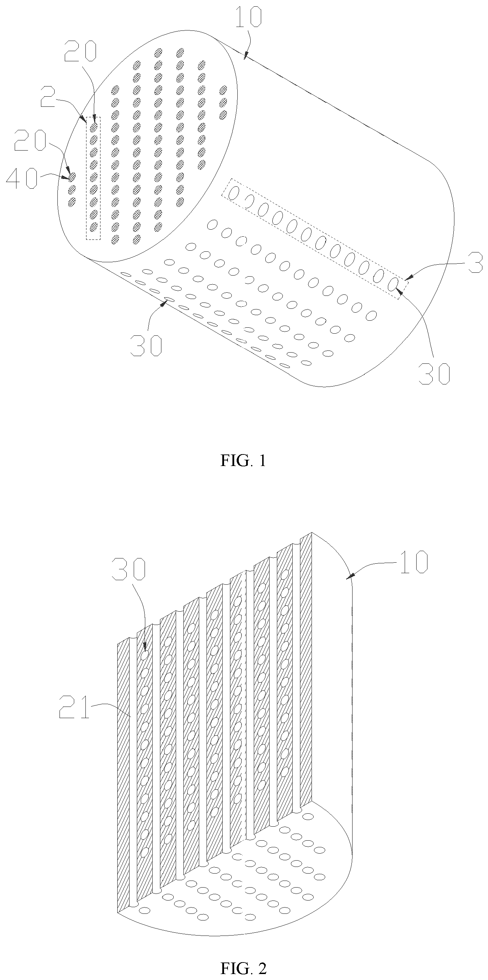

As shown in Figures 1 and 2, the fuel module of the present invention includes a columnar structure 10, multiple hollow closed holes 20 dispersedly arranged on the columnar structure 10, multiple cooling through-holes 30, and fuel 40 disposed inside the columnar structure 10. The fuel 40 is filled in the hollow closed holes 20.

The hollow closed holes 20 are located inside the columnar structure 10 and are closed and hollow holes for accommodating the fuel 40. The fuel 40 fills each of the hollow closed holes 20 and is also hermetically sealed inside the columnar structure 10. The heat from the fuel 40 is transferred to the columnar structure 10.The cooling through-holes 30 are separated from the hollow closed holes 20 and penetrate the columnar structure 10 on opposite sides for coolant passage. The cooling through-holes 30 run through opposite sides of the columnar structure 10 and are in an open state for the cooling medium to pass through, thereby taking away the heat from the columnar structure 10, cooling the fuel 40 and the column structure 10, and achieving the purpose of efficient heat exchange.

Specifically, the columnar structure 10 serves as a support body for the fuel module, which may be a cylinder, an elliptical column, or a polygonal column such as a rectangle or a hexagon. In terms of material, the columnar structure 10 can be made of metal, ceramic, glass, composite material, or a combination thereof. Preferably, the columnar structure 10 is made of least one of Zr alloy, stainless steel, molybdenum alloy, high-entropy alloy, silicon carbide, zirconium carbide, silicon carbide fiber reinforced silicon carbide composite material, high-entropy ceramic, metal ceramic composite material, or a combination thereof.

In terms of size setting, the height of the columnar structure 10 is 100 mm to 400 mm, and the peripheral dimensions of the columnar structure 10 are set according to the specific shape (e.g., circular or polygonal, etc.) and the desired size.

When the columnar structure 10 is prepared, hollow closed holes 20 and the cooling through-holes 30 are integrally formed therein. The columnar structure 10 may be formed by additive manufacturing, casting, slurry moulding or mechanical drilling of the billet.

When the columnar structure 10 is prepared using a metallic material, the hollow closed holes 20 and the cooling through-holes 30 may be directly printed and shaped by additive manufacturing, or they may be obtained in the form of a casting release using a column convex mould. When the columnar structure 10 is prepared using ceramic, glass or composite materials, the hollow closed holes 20 and the cooling through-holes 30 may be prepared by additive manufacturing by prefabricating a perforated billet and then sintering it, or may be obtained by slurry moulding by prefabricating a perforated billet for sintering it or by pre-determining the holes by means of a graphite filler in the course of the slurry moulding process, with the filler being removed by means of oxidisation procedures after sintering and preparation.

The hollow closed holes 20 extend in any direction within the columnar structure 10, and may be one or more of horizontally extending and vertically extending with respect to the columnar structure 10.

When setting up the hollow closed holes 20, first, the through-holes 21 penetrating the columnar structure 10 are set up, and after filling the fuel 4, the end of the through-holes 21 is sealed to form closed holes. The method of sealing the end of the through-holes 21 can be selected from one or more of the following methods: radiation heating welding, electron beam welding, resistance welding, laser welding, and shielded gas argon arc welding, etc.

The pore diameter of the hollow closed holes 20 is 5mm to 15mm. Within the columnar structure 10, the number of hollow closed holes 20 is 30 to 300. The pore diameter setting of the hollow closed holes 20 and the number of them within the columnar structure 10 can be determined according to the fuel loading required by the fuel module. Therefore, by adjusting the pore diameter and quantity of the hollow closed holes 20, the fuel loading of the fuel module can be increased.

Additionally, appropriate spacing exists between adjacent hollow closed holes 20 to ensure the structural strength of the columnar structure 10. As an option, the spacing between adjacent hollow closed holes 20 can be 5mm to 15mm.

Compared to the hollow closed holes 20 embedded inside the columnar structure 10, the cooling through-holes 30 are set to penetrate both sides of the columnar structure 10, forming an open cooling channel. The coolant can enter the cooling through-holes 30 from one direction and then flow out from the other direction, while carrying away the heat from the columnar structure 10 and the fuel 40 inside the hollow closed holes 20.

The cooling through-holes 30 on the columnar structure 10 can vertically extend along the height direction of the columnar structure 10 or horizontally extend. The pore diameter of the cooling through-holes 30 can be 5mm to 15mm.

Preferably, on the columnar structure 10, the hollow closed holes 20 and the cooling through-holes 30 are arranged in an interleaved manner. This ensures that there is at least one cooling through-hole 30 around each hollow closed hole 20. The heat from the fuel 40 inside the hollow closed holes 20 is transferred to the matrix of the columnar structure 10 and then to the coolant flowing through the cooling through-holes 30, thereby carrying away the heat.

Appropriate spacing exists between adjacent cooling through-holes 30, between cooling through-holes 30 and hollow closed holes 20, to ensure the structural strength of the columnar structure 10.

Considering the dispersion setting of the hollow closed holes 20 inside the columnar structure 10, some hollow closed holes 20 are located near or within the central part of the columnar structure 10, while others are near the edge part (outer surface) of the columnar structure 10. Therefore, there are multiple distances between the hollow closed holes 20 and the outer surface of the columnar structure 10. To ensure the strength of the columnar structure 10 and avoid thin-walled structures, the minimum distance between the center of the hollow closed holes 20 and the outer surface of the columnar structure 10 is 3mm to 10mm. That is, for all the hollow closed holes 20, the distance between the center of the hollow closed hole 20 located on the outermost side and the outer surface of the columnar structure 10 is 3mm to 10mm.

Similarly to the hollow closed holes 20, there are multiple distances between the cooling through-holes 30 and the outer surface of the columnar structure 10. To ensure the strength of the columnar structure 10 and avoid thin-walled structures, the minimum distance between the center of the cooling through-holes 30 and the outer surface of the columnar structure 10 is 3mm to 10mm. That is, for all the cooling through-holes 30, the distance between the center of the cooling through-hole 30 located on the outermost side and the outer surface of the columnar structure 10 is 3mm to 10mm.

In some embodiments, as shown in Figures 1 and 2, multiple hollow closed holes 20 are arranged to form multiple rows of closed hole groups 2, each closed hole group 2 comprising one or more hollow closed holes 20. The multiple rows of closed hole groups 2 are radially spaced along the columnar structure 10, and each hollow closed hole 20 extends axially within the columnar structure 10, vertically extending within the columnar structure 10. The number of hollow closed holes 20 between the rows of closed hole groups 2 gradually decreases from the central part near the center of the columnar structure 10 to the outer peripheral side of the columnar structure 10.

Multiple cooling through-holes 30 are arranged to form multiple rows of through-hole groups 3, each through-hole group 3 comprising one or more cooling through-holes 30. In the embodiments shown in Figures 1 and 2, each cooling through-hole 30 of the through-hole group 3 extends radially along the columnar structure 10 and intersects with the hollow closed holes 20 at 90 degrees. However, each cooling through-hole 30 can also extend axially along the columnar structure 10 and be parallel to the hollow closed holes 20.

Furthermore, on the columnar structure 10, the multiple rows of closed hole groups 2 and the multiple rows of through-hole groups 3 are arranged in an interleaved manner, such that there is one row of through-hole groups 3 between adjacent two rows of closed hole groups 2, and there is one row of closed hole groups 2 between adjacent two rows of through-hole groups 3.

The spacing between adjacent two rows of closed hole groups 2 is 10mm to 30mm, providing sufficient space for the interleaved through-hole groups 3, and isolating both while ensuring that there is sufficient wall thickness between the through-hole groups 3 and the adjacent closed hole groups 2 to maintain the structural strength of the columnar structure 10. Within the closed hole groups 2, the spacing between adjacent two hollow closed holes 20 is 5mm to 15mm.

Considering the limitations on the spacing between the hollow closed holes 20, the spacing between the closed hole groups 2, and the minimum distance between the outermost hollow closed holes 20 and the outer surface of the columnar structure 10, the main purpose is to ensure the strength of the columnar structure 10 and improve the heat transfer characteristics of the module while maximizing the fuel loading of the columnar structure 10.

The spacing between adjacent two rows of through-hole groups 3 is 10mm to 30mm, providing sufficient space for the interleaved closed hole groups 2, and isolating both while ensuring that there is sufficient wall thickness between the through-hole groups 3 and the adjacent closed hole groups 2 to maintain the structural strength of the columnar structure 10. Within the through-hole groups 3, the spacing between adjacent two cooling through-holes 30 is 5mm to 15mm.

Considering the limitations on the spacing between the cooling through-holes 30, the spacing between the through-hole groups 3, and the minimum distance between the outermost cooling through-holes 30 and the outer surface of the columnar structure 10, the main purpose is to ensure the strength of the columnar structure 10 and resist the impact of the coolant while optimizing the critical heat flux density calculation for the fuel module, improving the heat transfer performance of the columnar structure 10 and the fuel, thus achieving temperature control of the fuel module.

In other embodiments, multiple hollow closed holes 20 can also be arranged to form multiple hole rings, each hole ring comprising one or more hollow closed holes 20; multiple hole rings are distributed from the inside out along the radial direction of the columnar structure 10; multiple cooling through-holes 30 are also arranged to form multiple hole rings, and multiple hole rings are distributed from the inside out along the radial direction of the columnar structure 10 and are interleaved with the hole rings formed by the hollow closed holes 20.

The fuel 40 is filled in each hollow closed hole 20, and since the hollow closed hole 20 is a closed hole structure, the form of the fuel 40 therein is not limited, it can be at least one of block fuel, granular fuel, and liquid fuel. Specifically, block fuel includes at least one of fully ceramic-coated nuclear fuel and nuclear fuel sintered blocks; granular fuel includes coated granular fuel (such as TRISO particles); liquid fuel includes at least one of compound of liquid uranium and compound of liquid plutonium.

Additionally, among the aforementioned forms of fuel 40, the nuclear fuel includes at least one of UO₂, UC, UC₂, UN, UCN, UCO, U₃Si₂, U alloy, PuO₂, PuC, PuN, and Pu alloy.

The overall size of the fuel module of the present invention can be flexibly customized and is suitable for different scales of water reactors, lead reactors, molten salt reactors, sodium-cooled reactors, or gas-cooled reactors, especially prominent in small reactor applications.

In application, the fuel module can be used individually or assembled in multiple units to achieve module enlargement; the number of integrated fuel modules depends on the size of the reactor used. In terms of assembly, multiple fuel modules can be stacked axially or assembled radially. Assembly methods between fuel modules include pin positioning, embedding, threaded connection, and welding.

When the fuel module is used, depending on the type of reactor applied, the coolant flowing through the fuel module includes at least one or more of deionized water, lithium-containing water, boron-containing water, lead-bismuth melt, sodium melt, molten salt, argon, or helium.

Compared to the cooling water circulating between the cladding in traditional fuel assemblies, in the present invention, the coolant, through choices other than water (such as lead-bismuth melt, sodium melt, molten salt, etc.), can increase the thermal conductivity by three orders of magnitude. Compared to the direct heat exchange between the coolant and the cladding in traditional water reactors, the present invention's fuel module can further improve heat transfer by deviating from film boiling, reducing the critical heat flux density of the columnar structure 10 in the fuel module, and solving the boiling crisis of the coolant.

Compared to the traditional Zr alloy cladding components with a diameter of 9.5mm and a center-to-center spacing of 12.6mm in water reactors, in the fuel module of the present invention, with a setting range of adjacent spacing of hollow closed holes 20 from 5mm to 15mm, when the pore diameter of the hollow closed holes 20 is set to 9.5mm, the selectable range of adjacent spacing of hollow closed holes 20 is from 9.5mm to 15mm. By selecting 10mm, the fuel loading can be increased, and further by selecting high heat flux rate coolants such as lead-bismuth melt, sodium melt, molten salt, etc., as the coolant, efficient heat transfer can be achieved while reducing the total amount of coolant.

In summary, in the fuel module of the present invention, the columnar structure replaces the thin-walled, long tubular structure of existing fuel assemblies, with overall high structural strength, avoiding the risk of nuclear fuel leakage during assembly and refueling processes. At the same time, the fuel module has a higher ability to resist accident conditions during reactor operation. In the event of a loss-of-coolant accident (LOCA) and other water loss accidents, the fuel module is less prone to damage, providing maintenance personnel with sufficient time to perform reactor maintenance work.

The above-described embodiments are only examples of the present invention, and do not limit the scope of the present invention, that is solely defined by the claims.

## Claims

1. A nuclear fuel module, comprising a columnar structure (10), multiple hollow closed holes (20) dispersedly arranged on the columnar structure (10) , multiple cooling through-holes (30), and fuel (40) arranged inside the columnar structure (10); the hollow closed holes (20) are located within the columnar structure (10), with the fuel (40) filled in each of the hollow closed holes (20); the cooling through-holes (30) are separated from the hollow closed holes (20) and penetrate through the columnar structure (10) on opposite sides for a coolant to pass through;
wherein multiple hollow closed holes (20) are arranged to form multiple rows of closed hole groups (2), each closed hole group (2) comprising one or more hollow closed holes (20); a spacing between adjacent two rows of closed hole groups (2) is 10mm to 30mm; in the closed hole groups (2), a spacing between adjacent two hollow closed holes (20) is 5mm to 15mm; and
wherein multiple cooling through-holes (30) are arranged to form multiple rows of through-hole groups (3), each through-hole group (3) comprising one or more cooling through-holes (30); a spacing between adjacent two rows of through-hole groups (3) is 10mm to 30mm; in the through-hole groups (3), a spacing between adjacent two cooling through-holes (30) is 5mm to 15mm.

2. The nuclear fuel module according to Claim 1, **characterized in that** the columnar structure (10) is made of one or more of metal, ceramic, glass, and composite materials.

3. The nuclear fuel module according to Claim 2, **characterized in that** the columnar structure (10) is made of at least one of zirconium alloy, stainless steel, molybdenum alloy, high-entropy alloy, silicon carbide, zirconium carbide, silicon carbide fiber-reinforced silicon carbide composite material, high-entropy ceramic, and metal ceramic composite material.

4. The nuclear fuel module according to Claim 1, **characterized in that** the columnar structure (10) is cylindrical, an elliptical cylinder, or a polygonal cylinder.

5. The nuclear fuel module according to Claim 1, **characterized in that** an aperture diameter of the hollow closed holes (20) is 5mm to 15mm.

6. The nuclear fuel module according to Claim 1, **characterized in that** multiple hollow closed holes (20) extend vertically and/or horizontally within the columnar structure (10).

7. The nuclear fuel module according to Claim 1, **characterized in that** the hollow closed holes (20) and the cooling through-holes (30) are arranged in an interleaved manner.

8. The nuclear fuel module according to Claim 1, **characterized in that** a minimum distance between a center of the hollow closed holes (20) and an outer surface of the columnar structure (10) is 3mm; and/or
a minimum distance between a center of the cooling through-holes (30) and the outer surface of the columnar structure (10) is 3mm.

9. The nuclear fuel module according to Claim 1, **characterized in that** in the columnar structure (10), the number of hollow closed holes (20) is 30 to 300.

10. The nuclear fuel module according to any one of Claims 1 to 9, **characterized in that** the fuel (40) is at least one of block fuel, granular fuel, and liquid fuel;
the block fuel includes at least one of fully ceramic-coated nuclear fuel and nuclear fuel sintered blocks; and/or
the granular fuel includes coated granular fuel; and/or
the liquid fuel includes at least one of compound of liquid uranium and compound of liquid plutonium.

11. An application wherein the nuclear fuel module of any one of Claims 1 to 10 is used in water-cooled reactors, lead-cooled reactors, molten salt reactors, sodium-cooled reactors, or gas-cooled reactors.

## Patentansprüche

1. Kernbrennstoffmodul, umfassend eine Säulenstruktur (10), mehrere geschlossene Hohlbohrungen (20), die verteilt auf der Säulenstruktur (10) angeordnet sind, mehrere Kühldurchgangsbohrungen (30) und Brennstoff (40), der innerhalb der Säulenstruktur (10) angeordnet ist; die geschlossenen Hohlbohrungen (20) befinden sich innerhalb der Säulenstruktur (10), wobei der Brennstoff (40) in jede der geschlossenen Hohlbohrungen (20) gefüllt ist; die Kühldurchgangsbohrungen (30) sind von den geschlossenen Hohlbohrungen (20) getrennt und durchdringen die Säulenstruktur (10) auf gegenüberliegenden Seiten, damit ein Kühlmittel hindurchströmen kann;
wobei mehrere geschlossene Hohlbohrungen (20) angeordnet sind, um mehrere Reihen von geschlossenen Bohrungsgruppen (2) zu bilden, wobei jede geschlossene Bohrungsgruppe (2) eine oder mehrere geschlossene Hohlbohrungen (20) umfasst; ein Abstand zwischen zwei benachbarten Reihen von geschlossenen Bohrungsgruppen (2) beträgt 10 mm bis 30 mm; in den geschlossenen Bohrungsgruppen (2) beträgt ein Abstand zwischen zwei benachbarten geschlossenen Hohlbohrungen (20) 5 mm bis 15 mm; und
wobei mehrere Kühldurchgangsbohrungen (30) angeordnet sind, um mehrere Reihen von Durchgangsbohrungsgruppen (3) zu bilden, wobei jede Durchgangsbohrungsgruppe (3) eine oder mehrere Kühldurchgangsbohrungen (30) umfasst; ein Abstand zwischen zwei benachbarten Reihen von Durchgangsbohrungsgruppen (3) beträgt 10 mm bis 30 mm; in den Durchgangsbohrungsgruppen (3) beträgt ein Abstand zwischen zwei benachbarten Kühldurchgangsbohrungen (30) 5 mm bis 15 mm.

2. Kernbrennstoffmodul nach Anspruch 1, **dadurch gekennzeichnet, dass** die Säulenstruktur (10) aus einem oder mehreren von Metall, Keramik, Glas und Verbundwerkstoffen hergestellt ist.

3. Kernbrennstoffmodul nach Anspruch 2, **dadurch gekennzeichnet, dass** die Säulenstruktur (10) aus mindestens einem von Zirkoniumlegierung, rostfreiem Stahl, Molybdänlegierung, Hochentropielegierung, Siliziumkarbid, Zirkoniumkarbid, siliziumkarbidfaserverstärktem Siliziumkarbid-Verbundwerkstoff, Hochentropiekeramik und Metallkeramikverbundwerkstoff hergestellt ist.

4. Kernbrennstoffmodul nach Anspruch 1, **dadurch gekennzeichnet, dass** die Säulenstruktur (10) zylindrisch, ein elliptischer Zylinder oder ein polygonaler Zylinder ist.

5. Kernbrennstoffmodul nach Anspruch 1, **dadurch gekennzeichnet, dass** ein Bohrungsdurchmesser der geschlossenen Hohlbohrungen (20) 5 mm bis 15 mm beträgt.

6. Kernbrennstoffmodul nach Anspruch 1, **dadurch gekennzeichnet, dass** sich mehrere geschlossene Hohlbohrungen (20) vertikal und/oder horizontal innerhalb der Säulenstruktur (10) erstrecken.

7. Kernbrennstoffmodul nach Anspruch 1, **dadurch gekennzeichnet, dass** die geschlossenen Hohlbohrungen (20) und die Kühldurchgangsbohrungen (30) in einer verschachtelten Weise angeordnet sind.

8. Kernbrennstoffmodul nach Anspruch 1, **dadurch gekennzeichnet, dass** ein Mindestabstand zwischen einem Mittelpunkt der geschlossenen Hohlbohrungen (20) und einer Außenfläche der Säulenstruktur (10) 3 mm beträgt; und/oder
ein Mindestabstand zwischen einem Mittelpunkt der Kühldurchgangsbohrungen (30) und der Außenfläche der Säulenstruktur (10) 3 mm beträgt.

9. Kernbrennstoffmodul nach Anspruch 1, **dadurch gekennzeichnet, dass** in der Säulenstruktur (10) die Anzahl der geschlossenen Hohlbohrungen (20) 30 bis 300 beträgt.

10. Kernbrennstoffmodul nach einem der Ansprüche 1 bis 9, **dadurch gekennzeichnet, dass** der Brennstoff (40) mindestens eines von Blockbrennstoff, Granulatbrennstoff und Flüssigbrennstoff ist;
der Blockbrennstoff mindestens eines von vollkeramisch beschichtetem Kernbrennstoff und gesinterten Kernbrennstoffblöcken beinhaltet; und/oder
der Granulatbrennstoff beschichteten Granulatbrennstoff beinhaltet; und/oder
der Flüssigbrennstoff mindestens eines von Verbindung aus flüssigem Uran und Verbindung aus flüssigem Plutonium beinhaltet.

11. Anwendung, wobei das Kernbrennstoffmodul nach einem der Ansprüche 1 bis 10 in wassergekühlten Reaktoren, bleigekühlten Reaktoren, Salzschmelzenreaktoren, natriumgekühlten Reaktoren oder gasgekühlten Reaktoren verwendet wird.

## Revendications

1. Module de combustible nucléaire, comprenant une structure colonnaire (10), plusieurs trous creux fermés (20) disposés de manière dispersée sur la structure colonnaire (10), plusieurs trous de refroidissement traversants (30) et du combustible (40) disposé à l'intérieur de la structure colonnaire (10) ; les trous creux fermés (20) sont situés à l'intérieur de la structure colonnaire (10), le combustible (40) remplissant chacun des trous creux fermés (20) ; les trous de refroidissement traversants (30) sont séparés des trous creux fermés (20) et pénètrent à travers la structure colonnaire (10) sur des côtés opposés pour permettre le passage d'un fluide de refroidissement ;
dans lequel plusieurs trous creux fermés (20) sont disposés pour former plusieurs rangées de groupes de trous fermés (2), chaque groupe de trous fermés (2) comprenant un ou plusieurs trous creux fermés (20) ; un espacement entre deux rangées adjacentes de groupes de trous fermés (2) est de 10 mm à 30 mm ; dans les groupes de trous fermés (2), l'espacement entre deux trous creux fermés (20) adjacents est de 5 mm à 15 mm ; et
dans lequel plusieurs trous de refroidissement traversants (30) sont disposés pour former plusieurs rangées de groupes de trous traversants (3), chaque groupe de trous traversants (3) comprenant un ou plusieurs trous de refroidissement traversants (30) ; un espacement entre deux rangées adjacentes de groupes de trous traversants (3) est de 10 mm à 30 mm ; dans les groupes de trous traversants (3), un espacement entre deux trous de refroidissement traversants (30) adjacents est de 5 mm à 15 mm.

2. Module de combustible nucléaire selon la revendication 1, **caractérisé en ce que** la structure colonnaire (10) est constituée d'un ou plusieurs matériaux métalliques, céramiques, en verre et composites.

3. Module de combustible nucléaire selon la revendication 2, **caractérisé en ce que** la structure colonnaire (10) est composée d'au moins un parmi un alliage de zirconium, de l'acier inoxydable, un alliage de molybdène, un alliage à haute entropie, du carbure de silicium, du carbure de zirconium, un matériau composite de carbure de silicium renforcé par des fibres de carbure de silicium, une céramique à haute entropie et un matériau composite métal-céramique.

4. Module de combustible nucléaire selon la revendication 1, **caractérisé en ce que** la structure colonnaire (10) est cylindrique, un cylindre elliptique ou un cylindre polygonal.

5. Module de combustible nucléaire selon la revendication 1, **caractérisé en ce qu'**un diamètre d'ouverture des trous creux fermés (20) est de 5 mm à 15 mm.

6. Module de combustible nucléaire selon la revendication 1, **caractérisé en ce que** plusieurs trous creux fermés (20) s'étendent verticalement et/ou horizontalement à l'intérieur de la structure colonnaire (10).

7. Module de combustible nucléaire selon la revendication 1, **caractérisé en ce que** les trous creux fermés (20) et les trous de refroidissement traversants (30) sont disposés de manière entrelacée.

8. Module de combustible nucléaire selon la revendication 1, **caractérisé en ce qu'**une distance minimale entre le centre des trous creux fermés (20) et une surface extérieure de la structure colonnaire (10) est de 3 mm ; et/ou
une distance minimale entre un centre des trous de refroidissement (30) et la surface extérieure de la structure colonnaire (10) est de 3 mm.

9. Module de combustible nucléaire selon la revendication 1, **caractérisé en ce que** dans la structure colonnaire (10), le nombre de trous creux fermés (20) est de 30 à 300.

10. Module de combustible nucléaire selon l'une quelconque des revendications 1 à 9, **caractérisé en ce que** le combustible (40) est au moins un parmi un combustible en blocs, un combustible granulaire et un combustible liquide ;
le combustible en blocs comprend au moins un parmi un combustible nucléaire entièrement revêtu de céramique et/ou un bloc de combustible nucléaire fritté ; et/ou
le combustible granulaire comprend un combustible granulaire enrobé ; et/ou
le combustible liquide comprend au moins un parmi un composé d'uranium liquide et un composé de plutonium liquide.

11. Application dans laquelle le module de combustible nucléaire selon l'une quelconque des revendications 1 à 10 est utilisé dans des réacteurs refroidis à l'eau, des réacteurs refroidis au plomb, des réacteurs à sels fondus, des réacteurs refroidis au sodium ou des réacteurs refroidis au gaz.
